(19) Europäisches Patentamt
European Patent Office
Office européen des brevets

(11) **EP 4 576 394 A1**

(12) **EUROPEAN PATENT APPLICATION**

(43) Date of publication:
**25.06.2025 Bulletin 2025/26**

(21) Application number: **24221809.7**

(22) Date of filing: **19.12.2024**

(51) International Patent Classification (IPC):
*H01M 50/489 (2021.01)*    *H01M 50/403 (2021.01)*
*H01M 50/417 (2021.01)*    *H01M 50/42 (2021.01)*
*H01M 50/423 (2021.01)*    *H01M 50/431 (2021.01)*
*H01M 50/443 (2021.01)*    *H01M 50/446 (2021.01)*
*H01M 50/449 (2021.01)*    *H01M 50/457 (2021.01)*

(52) Cooperative Patent Classification (CPC):
H01M 50/489; H01M 50/403; H01M 50/417;
H01M 50/42; H01M 50/431; H01M 50/443;
H01M 50/446; H01M 50/449; H01M 50/457;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 KR 20230189122**

(71) Applicants:
• **SK Innovation Co., Ltd.**
**Seoul 03188 (KR)**
• **SK ie technology Co., Ltd.**
**Jongno-gu**
**Seoul**
**03188 (KR)**

(72) Inventors:
• **KWON, Tae Wook**
**34124 Daejeon (KR)**
• **CHANG, Kyeol**
**34124 Daejeon (KR)**
• **CHO, Kyu Young**
**34124 Daejeon (KR)**
• **LEE, Soon Bo**
**34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR AND LITHIUM SECONDARY BATTERY INCLUDING THE SAME; AND METHOD OF MANUFACTURING THE SEPARATOR**

(57) Provided are a separator having significantly excellent withstand voltage characteristics and a lithium secondary battery including the same. According to an aspect of the present disclosure, a separator including: a porous substrate; and an inorganic particle layer including a binder and inorganic particles formed on at least one surface of the porous substrate, wherein the separator has a ratio of a breakdown voltage (kV) of the separator to an overall average thickness ($\mu$m) of the separator of 0.15 kV/$\mu$m or more, has a peak shown in a range of 1070 cm$^{-1}$ to 1082 cm$^{-1}$ in a spectrum by Fourier transform infrared spectroscopy (FT-IR), has heat shrinkage rates in the machine direction and in the transverse direction of 5% or less as measured after being allowed to stand at 150°C for 60 minutes, and has $\Delta$Gurley permeability of 100 sec/100 ml or less is provided.

EP 4 576 394 A1

**Description**

**TECHNICAL** FIELD

The following disclosure relates to a separator having significantly excellent withstand voltage characteristics and a lithium secondary battery including the same. The following disclosure also relates to a method for manufacturing a separator.

**BACKGROUND**

A separator in an electrochemical device is very important for improving stability and performance (such as lifetime and capacity) of a battery. The main function of the separator is to provide an ion migration path in a battery and prevent physical contact between a negative electrode and a positive electrode, and a battery having excellent performance may be manufactured by improving the characteristics of the separator.

Research on the separator for a secondary battery as such is progressing in the direction of thinning of the thickness for high capacity/high output of an electrochemical device, and according to the thinning tendency of the separator, a big problem has emerged in that the breakdown voltage of the separator is decreased to deteriorate withstand voltage characteristics.

Breakdown voltage (BDV) refers to voltage at which, when voltage is applied to an insulating material, voltage passes through the insulating material to cause flame discharge and the part becomes conductive to lose insulation characteristics. Having higher breakdown voltage is evaluated as having excellent withstand voltage characteristics. The breakdown voltage is highly dependent on the thickness of the insulating material, and as the separator is thinned, the breakdown voltage of the electrochemical device is decreased. There may be risks of deterioration of battery stability and an increased defect rate of a battery at a low voltage in a thin separator. Therefore, a separator for a battery which has high breakdown voltage while having a small thickness is needed in order to have high stability and a low defect rate at a low voltage simultaneously with high capacity/high output characteristics.

SUMMARY

An embodiment of the present disclosure is directed to providing a separator having excellent withstand voltage characteristics, heat resistance, adhesion, and permeability.

Another embodiment of the present disclosure is directed to providing a lithium secondary battery having high capacity/high output characteristics, high stability, and a low defect rate at a low voltage, by including the separator.

The separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and other vehicles requiring high withstanding voltage for preventing climate change by suppressing air pollution and greenhouse gas emissions.

In one general aspect, a separator includes: a porous substrate; and an inorganic particle layer including a binder and inorganic particles disposed on at least one surface of the porous substrate, wherein a ratio of a breakdown voltage (kV) of the separator to an overall average thickness ($\mu$m) of the separator is 0.15 kV/$\mu$m or more, and wherein the separator has a peak in a range of 1070 cm$^{-1}$ to 1082 cm$^{-1}$ in a spectrum by Fourier transform infrared spectroscopy (FT-IR), heat shrinkage rates in the machine direction and in the transverse direction of 5% or less as measured after being allowed to stand at 150°C for 60 minutes, and $\Delta$Gurley permeability of 100 sec/100 ml or less as calculated by the following Equation 1.

$$[\text{Equation 1}]$$

$$\Delta\text{Gurley permeability (sec/100 ml)} = P_m - P_s$$

wherein $P_m$ is a gas permeability of the separator, and $P_s$ is a gas permeability of the porous substrate.

In an example embodiment, the inorganic particles may include any one or two or more selected from the group consisting of metal hydroxides, metal oxides, metal nitrides, and metal carbides.

In an example embodiment, the inorganic particles may have an average particle diameter (D50) of 0.01 um to 0.65 $\mu$m.

In an example embodiment, the inorganic particles may include first type of inorganic particles having an average particle diameter (D50) of 0.01 um to 0.5 um.

In an example embodiment, the inorganic particles may further include second type of inorganic particles having a larger average particle diameter (D50) than the first type of inorganic particles. Optionally, the second inorganic particles may have the average particle diameter (D50) of 0.4 um to 1.0 um, or 0.6 um to 0.8 um

In an example embodiment, the second type of inorganic particles may be included at 50 wt% or less based on the total weight of the first type of inorganic particles and the second type of inorganic particles.

In an example embodiment, the binder may include a particulate binder and a water-soluble binder.

In an example embodiment, the particulate binder may have a glass transition of -60°C to 0°C.

In an example embodiment, the water-soluble binder may have a glass transition of 180°C to 220°C.

In an example embodiment, the particulate binder and the water-soluble binder may independently of each other include any one or more selected from the group consisting of ester-based polymers, amide-based polymers, imide-based polymers, acryl-based polymers, acrylamide-based polymers, vinyl alcohol-based polymers, fluorine-based polymers, and vinylpyrrolidone-based polymers.

In an example embodiment, a particular combination of the particulate binder and the water-soluble binder is used and independently includes acryl-based polymers and/or acrylamide-based polymers, preferably include an acryl-based particulate binder and an acrylamide-based water-soluble binder.

In an example embodiment, the binder may be included at 0.1 parts by weight to 20 parts by weight with respect to 100 parts by weight of the inorganic particles.

In an example embodiment, a weight ratio between the water-soluble binder and the particulate binder may be 1:1 to 1:10.

In an example embodiment, the inorganic particle layer may have a packing density of 1.2 g/m$^2$·μm or more.

In another general aspect of the present disclosure, a method for manufacturing a separator comprises: providing a porous substrate; a step of preparing a coating slurry including a binder and inorganic particles; and a step of applying the coating slurry on one or both surfaces of the porous substrate to form an inorganic particle layer respectively on one or both surfaces of the porous substrate; wherein the separator obtained has a peak in a range of 1070 cm$^{-1}$ to 1082 cm$^{-1}$ in a spectrum by Fourier transform infrared spectroscopy (FT-IR), has heat shrinkage rates in the machine direction and in the transverse direction of 5% or less as measured after being allowed to stand at 150°C for 60 minutes, and has ΔGurley permeability of 100 sec/100 ml or less as calculated by the following Equation 1:

$$[Equation\ 1]$$

$$\Delta Gurley\ permeability\ (sec/100\ ml)\ =\ P_m\ -\ P_s$$

wherein $P_m$ is a gas permeability of the separator, and $P_s$ is a gas permeability of the porous substrate.

In an example embodiment of the method, the peak in the range of 1070 cm$^{-1}$ to 1082 cm$^{-1}$ is indicating the binding energy between atoms included in the inorganic particles included in the inorganic particle layer, and presence or absence of the peak shown in the range of 1070 cm$^{-1}$ to 1082 cm$^{-1}$ is determined by any one of: average particle diameter of the inorganic particles; a combination of first and second type of inorganic particles; a weight ratio of one or two or more types of inorganic particles; and the type and the physical properties of binder.

In a further example embodiment, the method is used to manufacture the separator of the present disclosure.

In another general aspect, a lithium secondary battery includes the separator described above.

Other features and aspects will be apparent from the following detailed description, the drawings, and the claims.

## DETAILED DESCRIPTION OF EMBODIMENTS

Hereinafter, the present disclosure will be described in detail. However, the embodiments described in the present specification may be modified in many different forms, and the technology according to an example embodiment is not limited to the embodiments set forth herein. In addition, it is noted that various variations of the example embodiment are provided so that the present disclosure will be further fully described to a person with ordinary skill in the art.

In addition, a singular form used in the specification and claims appended thereto may include a plural form also, unless otherwise indicated in the context.

Also, a numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising", "including" or "containing" any constituent elements will be understood to imply further inclusion of other constituent elements rather than exclusion of other constituent elements.

Unless otherwise defined in the present specification, an average particle diameter of inorganic particles and particulate binder refers to a D50 value. D50 refers to a particle diameter of inorganic particles and particulate binder corresponding to 50% in terms of a volume-based integrated fraction. The average particle diameter may be derived from particle size distribution results obtained by collecting a sample of inorganic particles and particulate binder to be measured in accordance with the standard of ISO 13320-1 and performing analysis using S3500 available from MICROTRAC.

In the present specification, " MD (machine direction)" refers to the longitudinal direction of a porous substrate and a separator manufactured in a long shape, and "TD (transverse direction)" refers to a direction orthogonal to "MD direction" in a surface direction of the porous substrate and a separator. In the disclosure, "TD" also refers to a width direction.

In the present specification, an overall average thickness of a separator refers to an overall average thickness of a separator including a porous substrate and an inorganic particle layer provided on at least one surface of the porous substrate. In an example embodiment, the overall average thickness ($\mu$m) of the separator may be determined by the following method. The separators were overlapped in 10 layers, each thickness was measured at 5 random points in TD (transverse direction) by a thickness meter available from Mitutoyo, the sum of the thicknesses was divided by 5 to derive an average thickness of the 10-layer separator, and the value was divided by 10 again to derive the overall average thickness of a single separator.

In the present specification, an average thickness of a porous substrate refers to an average thickness of only the porous substrate having no inorganic particle layer provided on at least one surface. In an example embodiment, the average thickness ($\mu$m) of the porous substrate may be determined by the following method. Only porous substrates having no inorganic particle layer provided on at least one surface were overlapped in 10 layers, each thickness was measured at 5 random points in TD by a thickness meter available from Mitutoyo, the sum of thicknesses was divided by 5 to derive an average thickness of the 10-layer porous substrate, and the value was divided by 10 again to derive the average thickness of the porous substrate. In the case in which the average thickness of the porous substrate having the inorganic particle layer provided on at least one surface is determined, the inorganic particle layer is released using any method known in the art without limitation and is sufficiently dried, and then the average thickness of the porous substrate from which the inorganic particle layer has been released is determined.

In the present specification, a packing density($g/(m^2 \cdot \mu m)$) of the inorganic particle layer refers to the weight of the inorganic particle layer loaded to a unit area ($m^2$) and a unit height ($\mu$m) of the porous substrate. In an example embodiment, a method for measuring the packing density of the inorganic particle layer may be carried out by the following method. The average thickness of the porous substrate and the overall average thickness of the separator having the inorganic particle layer provided on the porous substrate are measured, respectively, and then the average thickness of the porous substrate is subtracted from the overall average thickness of the separator to calculate the thickness (T, um) of the inorganic particle layer. The separator having the inorganic particle layer provided on at least one surface of the porous substrate is cut into an area (S, $m^2$) of 10 mm × 10 mm ($0.01\ m^2$) to measure the weight, and the weight of the porous substrate is subtracted therefrom to calculate the weight (W, g) of only the inorganic particle layer. The packing density of the inorganic particle layer is calculated by the formula W/(T*S).

In the present specification, a glass transition temperature (Tg) refers to a temperature range in which glass transition occurs and refers to a value measured using a dilatometer or a differential scanning calorimeter (DSC).

In the present specification, when it is described that an element such as a layer, film, region, or substrate is referred to as being "on" or "above" another element, it may be "directly on" the other element or intervening elements may also be present.

The terms such as "first" and "second" used in the present specification may be used to describe various constituent elements, but the constituent elements are not to be limited to the terms. The terms are used only to differentiate one constituent element from other constituent elements.

The present disclosure provides a separator which may provide a battery with high withstand voltage characteristics, heat resistance, adhesion, and permeability high capacity/high output characteristics, high stability, and a low defect rate at a low voltage. Specifically, the separator according to this disclosure includes: a porous substrate; and an inorganic particle layer including a binder and inorganic particles disposed on at least one surface of the porous substrate, wherein the separator has a ratio (hereinafter, referred to as BDV/t) of a breakdown voltage (BDV, kV) of the separator to an overall average thickness (t, um) of the separator of $0.15\ kV/\mu m$ or more, has a peak (hereinafter, referred to as a first peak) shown in a range of $1070\ cm^{-1}$ to $1082\ cm^{-1}$ in a spectrum by Fourier transform infrared spectroscopy (FT-IR), has heat shrinkage rates in the machine direction and in the transverse direction of 5% or less as measured after being allowed to stand at 150°C for 60 minutes, and has $\Delta$Gurley permeability of 100 sec/100 ml or less as calculated by the following Equation 1:

[Equation 1]

$$\Delta\text{Gurley permeability (sec/100 ml)} = P_m - P_s$$

wherein $P_m$ is a gas permeability of the separator, and $P_s$ is a gas permeability of the porous substrate.

It was first recognized that the separator according to this disclosure may have significantly excellent withstand voltage characteristics, heat resistance, adhesion, and permeability simultaneously even at a small thickness by satisfying the ratio of the breakdown voltage (kV) of the separator to the overall average thickness ($\mu$m) of the separator of 0.15 kV/$\mu$m or more, satisfying the peak shown in the FT-IR spectrum of 1070 cm$^{-1}$ to 1082 cm$^{-1}$, and having the heat shrinkage rate and the $\Delta$Gurley permeability in the above ranges, and thus, the separator was invented.

In addition, the lithium secondary battery according to this disclosure may have all of high capacity/high output characteristics, high stability, and a low defect rate at a low voltage, by including the separator satisfying the first peak in a specific range shown in the FT-IR spectrum, BDV/t in a specific range, the heat shrinkage rate, and the $\Delta$Gurley permeability value simultaneously. Specifically, since the lithium secondary battery according to this disclosure includes the separator having significantly improved withstand voltage characteristics at a small thickness, it may have low discharge resistance which is initially measured and show a significantly low ratio of increased discharge resistance compared to the initial discharge resistance after 300 cycles, and thus, may have improved output characteristics.

The effect results from adjustment of the ratio of the breakdown voltage (kV) of the separator to the overall average thickness ($\mu$m) of the separator, the peak in the FT-IR spectrum, the heat shrinkage rate, and the $\Delta$Gurley permeability to each specific range, and is not affected only by the constituent element of the separator or any specific element during the manufacturing process of the separator. As confirmed in this disclosure, the effects may be implemented by various means including various factors such as the average particle diameter of the inorganic particles, a combination of inorganic particles, the weight ratio of two or more inorganic particles, and the type and the physical properties of the binder. The means for obtaining the effects is not particularly limited as long as it may be achieved. For example, the first peak may be derived from binding energy between constituent atoms of the inorganic particles included in the inorganic particle layer, and the range of the first peak is not determined only by the characteristics of the inorganic particles themselves such as the average particle diameter and materials, but may be determined by various factors such as characteristics of the binder or the porous substrate other than the inorganic particles.

In an example embodiment, the breakdown voltage (BDV, kV) of the separator is measured in accordance with ASTM D 3755. The breakdown voltage is a voltage (kV) measured when a leakage current value is 5 mA, under conditions of placing the separator between electrodes of a withstand voltage tester (19052 model from Croma) under a dry room (dew point temperature: -60°C) and then raising an applied voltage to 5 kV/10 sec. The voltage herein is evaluated as the breakdown voltage (BDV).

In an example embodiment, the BDV/t may be 0.15 kV/$\mu$m or more, 0.155 kV/$\mu$m or more, 0.16 kV/$\mu$m or more, 0.163 kV/um or more and though the upper limit is not particularly limited, for example, 0.3 kV/$\mu$m or less, 0.25 kV/$\mu$m or less, or 0.2 kV/um or less. In a specific example embodiment, the value of Equation (1) may be 0.15 to 0.3 kV/ $\mu$m, 0.15 to 0.25 kV/$\mu$m, 0.155 to 0.2 kV/$\mu$m, or 0.156 to 0.164 kV/$\mu$m, but is not limited thereto.

In an example embodiment, the first peak may have a maximum intensity in a range of 1070 cm$^{-1}$ to 1082 cm$^{-1}$, and specifically, a peak having the highest intensity in a range of 1071 cm$^{-1}$ to 1082 cm$^{-1}$, 1072 cm$^{-1}$ to 1082 cm$^{-1}$, 1075 cm$^{-1}$ to 1082 cm$^{-1}$, or 1075 cm$^{-1}$ to 1081 cm$^{-1}$.

In an example embodiment, the separator may further have a second peak in a range of 1140 cm$^{-1}$ to 1160 cm$^{-1}$ in the FT-IR spectrum. The second peak may have the highest intensity in the range described above, and specifically, may have the highest intensity in a range of 1145 cm$^{-1}$ to 1155 cm$^{-1}$.

In an example embodiment, the separator may further have a third peak in a range of 2910 cm$^{-1}$ to 2930 cm$^{-1}$ in the FT-IR spectrum. The third peak may have the highest intensity in the range described above, and specifically, may have the highest intensity in a range of 2915 cm$^{-1}$ to 2925 cm$^{-1}$ or in a range of 2915 cm$^{-1}$ to 2920 cm$^{-1}$.

In an example embodiment, the separator may further have a fourth peak in a range of 3090 cm$^{-1}$ to 3100 cm$^{-1}$ in the FT-IR spectrum. The fourth peak may have the highest intensity in the range described above, and specifically, may have the highest intensity in a range of 3095 cm$^{-1}$ to 3105 cm$^{-1}$.

In an example embodiment, the separator may further have a fifth peak in a range of 3280 cm$^{-1}$ to 3320 cm$^{-1}$ in the FT-IR spectrum. The fifth peak may have the highest intensity in the range described above, and specifically, may have the highest intensity in a range of 3280 cm$^{-1}$ to 3310 cm$^{-1}$ or in a range of 3285 cm$^{-1}$ to 3300 cm$^{-1}$.

In an example embodiment, the FT-IR spectrum of the separator may be measured using an FT-IR instrument equipped with a mercury cadmium telluride (MCT) detector, and specifically, may be measured in a transmission mode by scanning 5 to 200 times at a resolution of 4 cm$^{-1}$ in a range of 4000 cm$^{-1}$ to 675 cm$^{-1}$.

The separator according to an example embodiment may have excellent heat resistance. In an example embodiment, the heat shrinkage rates in the machine direction and/or in the transverse direction of the separator which are measured after being allowed to stand at 150°C for 60 minutes may be 5% or less, preferably 4% or less, more preferably 3.7% or less, 3.5% or less, 3.3% or less, 2% or less, 1.6% or less, 1.3% or less, 1.0% or less, 0.8% or less, or 0.6% or less. For example, it may be 0.5 to 3.5% or 0.5 to 2.0%.

The separator according to an example embodiment may have excellent gas permeability. In an example embodiment, the separator may have the ΔGurley permeability of 100 sec/100 ml or less as calculated by the following Equation 1, in the Gurley permeability measured in accordance with ASTM D726. Otherwise, the separator may have the ΔGurley permeability of 80 sec/100 ml or less, 50 sec/100 ml or less, 40 sec/100 ml or less, or 35 sec/100 ml or less, and though the lower limit is not particularly limited, the lower limit may be, for example, 5 sec/100 ml or more or 10 sec/100 ml or more. In a specific example embodiment, the ΔGurley permeability of the separator may be 5 to 100 sec/100 ml, 5 to 80 sec/100 ml, 5 to 50 sec/100 ml, 5 to 40 sec/100 ml, 10 to 35 sec/100 ml, or 25 to 35 sec/100 ml.

[Equation 1]

$$\Delta\text{Gurley permeability (sec/100 ml)} = P_m - P_s$$

wherein $P_m$ is a gas permeability of a separator, and $P_s$ is a gas permeability of a porous substrate.

In an example embodiment, the inorganic particles are not limited and may be any suitable inorganic particles used in the art. As a non-limiting example, the inorganic particles may include any one or two or more selected from the group consisting of metal hydroxides, metal oxides, metal nitrides, and metal carbides. For example, the inorganic particles may include any one or two or more selected from the group consisting of magnesium oxide (MgO), magnesium hydroxide ($Mg(OH)_2$), alumina ($Al_2O_3$), boehmite ($\gamma$-AlO(OH)), aluminum hydroxide ($Al(OH)_3$), silica ($SiO_2$), silicon carbide (SiC), calcium oxide (CaO), titanium dioxide ($TiO_2$), strontium titanate ($SrTiO_3$), zinc oxide (ZnO), yttrium oxide ($Y_2O_3$), zirconium oxide ($ZrO_2$), tin oxide ($SnO_2$), and cerium oxide ($CeO_2$). In terms of battery stability and similar inorganic materials, the inorganic particles may be preferably any one or two or more metal hydroxide particles selected from the group consisting of boehmite, aluminum hydroxide ($Al(OH)_3$), and magnesium hydroxide ($Mg(OH)_2$).

In an example embodiment, the shape of the inorganic particles is not limited, and may be spherical, oval, needle-shaped, plate or plate-like shape, and similar shapes.

In an example embodiment, the inorganic particles may have an average particle diameter (D50) of 0.01 um or more, 0.05 um or more, 0.1 um or more and 0.65 um or less, 0.5 um or less, 0.4 um or less, 0.3 um or less, or a value between these numerical values. For example, the D50 of the inorganic particles may be 0.01 um to 0.65 um, 0.01 um to 0.5 um, 0.05 um to 0.4 um, or 0.1 um to 0.3 um, but may be changed unless it goes beyond the scope of the present disclosure.

In an example embodiment, the inorganic particles may include the first type of inorganic particles having the average particle diameter (D50) of 0.01 um to 0.5 um, and the D50 of the first type of inorganic particles may be 0.05 um to 0.4 um, 0.1 um to 0.35 um, or 0.1 um to 0.3 $\mu$m.

In an example embodiment, the inorganic particles may include the first type of inorganic particles and the second type of inorganic particles having a larger average particle diameter (D50) than the first type of inorganic particles. Specifically, the inorganic particles may include the first type of inorganic particles and the second type of inorganic particles within a range in which the average particle diameter (D50) satisfies the range described above. The second type of inorganic particles may have the average particle diameter (D50) of 0.4 um to 1.0 um, 0.5 um to 0.9 um, 0.6 um to 0.8 um, or 0.7 um to 0.8 $\mu$m.

In an example embodiment, the second type of inorganic particles may be included at 50 wt% or less, 40 wt% or less, 35 wt% or less, 30 wt% or less and 1 wt% or more, 10 wt% or more, 20 wt% or more, or a value between the numerical values, based on the total weight of the first type of inorganic particles and the second type of inorganic particles. For example, the content of the second type of inorganic particles may be 1 wt% to 50 wt%, 1 wt% to 40 wt%, 5 wt% to 40 wt%, 10 wt% to 40 wt%, 20 wt% to 40 wt%, or 20 wt% to 30 wt%, based on the total weight of the first type of inorganic particles and the type of second inorganic particles.

According to another example embodiment, the inorganic particles may include only the first type of inorganic particles having the average particle diameter (D50) in the range described above.

That is, the inorganic particles may include 50 to 100 wt% of the first type of inorganic particles having the average particle diameter (D50) in the range described above and 0 to 50 wt% of the second type of inorganic particles having the average particle diameter (D50) in the range described above, based on the total weight of the inorganic particles. Otherwise, the inorganic particles may include 65 to 100 wt% of the first type of inorganic particles and 0 to 35 wt% of the second type of inorganic particles, or 70 to 100 wt% of the first type of inorganic particles and 0 to 30 wt% of the second type of inorganic particles. When the composition ratio in the range described above is satisfied, a separator having better physical properties may be provided.

The first type of inorganic particles and the second type of inorganic particles may be composed of the same or different inorganic materials. When first type of inorganic particles and second type of inorganic particles are used which

**EP 4 576 394 A1**

are respectively composed of the same inorganic materials, they can be distinguished by different particle size distributions, respectively different D50 values.

Sizes of the inorganic particles, or - when first and second type of inorganic particles are used - those types of inorganic particles respectively having different sizes, may be defined by their respective particle size distributions and hence their respective D50 values. Different sizes of first and second type of inorganic particles may be obtained by originally using such size-specific types of first and second type of inorganic particles for preparing the inorganic particle layer.

In an example embodiment, the binder may include a particulate binder and a water-soluble binder. When the particulate binder and the water-soluble binder are used as the binder, the withstand voltage characteristics, the heat resistance, the adhesion, and the permeability of the separator may be improved significantly.

In an example embodiment, the specific particle shape of the particulate binder is not particularly limited. For example, the particulate binder may have a spherical, oval, plate, or irregular particle shape.

In an example embodiment, the particulate binder may have an average particle diameter (D50) of 10 nm or more, 100 nm or more, 150 nm or more and 1000 nm or less, 500 nm or less, 400 nm or less, or a value between the numerical values. As an example embodiment, the particulate binder may have an average particle diameter (D50) of 10 nm to 1000 nm, 100 nm to 500 nm, 150 nm to 400 nm, or 250 nm to 400 nm. When the particulate binder has the average particle diameter, the binder is uniformly dispersed with the water-soluble binder in a water-based slurry composition, so that the withstand voltage characteristics, the heat resistance, the adhesion, and the permeability of the separator may be improved significantly.

In an example embodiment, the particulate binder may have a glass transition temperature of -60°C to 0°C, -50°C to -10°C, -50°C to -20°C, or -45°C to -20°C. By including the particulate binder having the glass transition temperature in the range described above, the separator according to an example embodiment may have excellent withstand voltage characteristics, heat resistance, adhesion, and permeability simultaneously.

As an example embodiment, the water-soluble binder may have the glass transition temperature of 180°C to 220°C, 190°C to 210°C, or 200°C to 210°C. By including the water-soluble binder and the particulate binder having the glass transition temperature in the range described above, respectively, the separator according to an example embodiment may implement excellent withstand voltage characteristics, heat resistance, adhesion, and permeability simultaneously. In addition, a battery to which the separator described above is applied may have all of more improved high capacity/high output characteristics, high stability, and a low defect rate at a low temperature.

In an example embodiment, the water-soluble binder may have a weight average molecular weight in terms of polyethylene glycol measured using gel transmission chromatography of 10,000 g/mol or more, 100,000 g/mol or more, 200,000 g/mol or more and 2,000,000 g/mol or less, 1,000,000 g/mol or less, 500,000 g/mol or less, or a value between the numerical values. As an example embodiment, the water-soluble binder may have a weight average molecular weight of 10,000 to 2,000,000 g/mol, 100,000 to 2,000,000 g/mol, 200,000 to 1,000,000 g/mol, or 200,000 to 500,000 g/mol.

In an example embodiment, the binder may include the particulate binder and the water-soluble binder, and a person skilled in the art to which the present disclosure pertains may appropriately select a known binder according to the purpose and situation. That is, the binder is not limited as long as it is used as a binder of an inorganic particle layer in which inorganic particles formed on the surface of a porous substrate layer of a secondary battery separator are connected by a binder to form pores.

In an example embodiment, the particulate binder and the water-soluble binder may include a polymer, and, for example, may include independently of each other any one or more selected from the group consisting of ester-based polymers, amide-based polymers, imide-based polymers, acryl-based polymers, acrylamide-based polymers, vinyl alcohol-based polymers, fluorine-based polymers, and vinylpyrrolidone-based polymers. In an example embodiment, the particulate binder may include the acryl-based polymer, and the water-soluble binder may include an acrylamide-based polymer.

In an example embodiment, a total content of the binder including the particulate binder and the water-soluble binder may be appropriately adjusted depending on the situation and the purpose within the scope of the present disclosure. For example, the content of the binder may be 0.1 parts by weight to 20 parts by weight, 0.1 parts by weight to 15 parts by weight, 1 part by weight to 10 parts by weight, or 2 parts by weight to 8 parts by weight, with respect to 100 parts by weight of the inorganic particles.

In an example embodiment, a weight ratio between the water-soluble binder and the particulate binder may be 1:1 to 1:10, 1:1 to 1:8, 1:3 to 1:7, or 1:4 to 1:6, with the first number in the numerator of the weight ratio representing the water soluble binder and the second number in the denominator of the weight ratio representing the particulate binder. However, the weight ratio between the water-soluble binder and the particulate binder may not necessarily be limited thereto.

In an example embodiment, the inorganic particle layer may have a packing density of 1.2 g/(m$^2$· um) or more, 1.3 g/(m$^2$·um) or more and 2.5 g/(m$^2$· um) or less, 2.0 g/(m$^2$· um) or less, 1.8 g/(m$^2$· um) or less, or a value between the numerical values, and specifically, 1.2 to 2.5 g/(m$^2$· $\mu$m), 1.2 to 2.0 g/(m$^2$· $\mu$m), 1.2 to 1.8 g/(m$^2$· $\mu$m), 1.3 to 1.8 g/(m$^2$· $\mu$m),

1.2 to 1.5 g/(m$^2 \cdot \mu$m), or 1.2 to 1.4 g/(m$^2 \cdot \mu$m), but is not limited thereto.

In an example embodiment, the inorganic particle layer may include a binder and inorganic particles and may be a porous inorganic particle layer in which the inorganic particles are connected and fixed by the binder to form pores. In an example embodiment, the inorganic particle layer is provided on at least one surface of the porous substrate, may occupy an area fraction of 60% or more, 70% or more, 80% or more, or 90% or more, based on the total surface of the porous substrate, and preferably, may be formed on the area of the porous substrate of 100%.

In an example embodiment, the inorganic particle layer may be coated on one or both surfaces of the porous substrate, and when the inorganic particle layer is coated on both surfaces of the porous substrate, the thickness of the inorganic particle layers coated on one surface and that on the other surface may be the same as or different from each other.

The separator according to this disclosure may have excellent withstand voltage characteristics, heat resistance, adhesion, and permeability simultaneously even when a thin inorganic particle layer is at least one surface, preferably both surfaces of the porous substrate. In an example embodiment, the total thickness of the inorganic particle layer is not necessarily limited thereto, but may be 0.5 um or more, 1 um or more, 1.5 um or more and 9 um or less, 6 um or less, or a value between the numerical values. For example, the total thickness of the inorganic particle layer may be 0.5 um to 9 um, 1 um to 6 um, or 1.5 um to 6 $\mu$m.

In an example embodiment, the porous substrate may be a polyolefin-based porous substrate such as polyethylene, polypropylene, or copolymers thereof, but is not limited thereto, and any porous substrate known as a porous substrate of a separator of a lithium secondary battery may be used. In an example embodiment, the porous substrate may be manufactured into a film or sheet, but is not particularly limited.

In an example embodiment, the porous substrate may have a porosity of 20 to 60% or 30 to 60%, but is not limited thereto.

In an example embodiment, the porous substrate may have a Gurley permeability of 10 sec/100 ml or more, 25 sec/100 ml or more and 500 sec/100 ml or less, 200 sec/100 ml or less, 150 sec/100 ml or less, or a value between the numerical values, or 10 to 500 sec/100 ml, 25 to 200 sec/100 ml, or 25 to 150 sec/100 ml, but is not limited thereto.

In an example embodiment, the porous substrate may have a thickness of 1 um or more, 3 um or more, 5 um or more and 100 um or less, 50 um or less, 30 um or less, 20 um or less, 15 $\mu$m or less, or a value between the numerical values, and 1 to 100 $\mu$m, specifically, for implementing a high capacity battery, 3 to 50 $\mu$m, 5 to 20 um, or 5 to 15 um. Though it is not limited thereto, the porous substrate may be manufactured by stretching.

Hereinafter, a method for manufacturing a separator of the present disclosure will be described.

The method for manufacturing the separator satisfying the physical properties described above simultaneously may include: preparing a coating slurry including a binder and inorganic particles; and applying the coating slurry on at least one surface of a porous substrate to form an inorganic particle layer.

Since the explanation of each of the porous substrate, the inorganic particle layer, the inorganic particles, and the binder is as described above, detailed description thereof will be omitted.

Any common method known in the art may be applied without limitation to a method for preparing a coating slurry, and according to a non-limiting example without particular limitation, the slurry may be prepared by dispersing the inorganic particles by stirring, and the agglomerated inorganic particles may be dispersed using a ball mill.

The coating slurry includes inorganic particles, a binder, and a solvent, and the solvent is not particularly limited and may be a solvent which is easy to dissolve or disperse the binder. For example, any one or more selected from water, lower alcohols such as ethanol, methanol, and propanol, dimethylformamide, acetone, tetrahydrofuran, diethyl ether, methylene chloride, DMF, N-ethyl-2-pyrrolidone, hexane, and cyclohexane.

In an example embodiment, a solid content of the coating slurry is not particularly limited, but for example, may be 10 wt% to 50 wt%, 15 wt% to 40 wt%, or 20 wt% to 35 wt%, but is not limited thereto.

In an example embodiment, as a method for coating the coating slurry on the porous substrate, any common method known in the art may be applied without limitation, and according to a non-limiting example, roll coating, spin coating, dip coating, bar coating, die coating, slit coating, inkjet printing, and a combination of these methods may be applied. The applied slurry may be dried and formed into an inorganic particle layer. The drying may be performed by drying by warm air, hot air, or low-humidity air, vacuum drying, irradiation with far infrared rays or electron beams, and other driers. Since a drying temperature is not particularly limited, it may be appropriately adjusted depending on the experimental environment or the purpose, and for example, may be 30°C to 120°C, 30°C to 100°C, or 30°C to 60°C.

The present disclosure may provide a lithium secondary battery including the separator according to one of the example embodiments described above. Since the lithium secondary battery includes the separator as described above, it may have all of the high capacity/high output characteristics, high stability, and a low defect rate at a low voltage. Specifically, the lithium secondary battery may have low discharge resistance which is initially measured and show a significantly low ratio of increased discharge resistance compared to the initial discharge resistance after 300 cycles, and thus, may have improved output characteristics.

The lithium secondary battery according to present disclosure may include the separator described above positioned between a positive electrode and a negative electrode. Herein, the positive electrode and the negative electrode may be used without limitation as long as they are commonly used in the lithium secondary battery.

Hereinafter, the constituent elements of the secondary battery according to the present disclosure will be further described.

[Positive electrode]

A positive electrode may include a positive electrode current collector and a positive electrode active material layer disposed on at least one surface of the positive electrode current collector.

(Positive electrode current collector)

A positive electrode current collector may include stainless steel, nickel, aluminum, titanium, or an alloy thereof. The positive electrode current collector may include carbon, nickel, titanium, or aluminum of which the surface is treated with silver, or stainless steel. Though the positive electrode current collector is not limited thereto, thickness may be, for example, 10 um to 50 $\mu$m.

(Positive electrode material)

A positive electrode active material layer may include a positive electrode active material. The positive electrode active material may include a compound which may reversibly intercalate and deintercalate lithium ions.

According to example embodiments, the positive electrode active material may be used without limitation as long as it is a conventionally used positive electrode active material, and for example, the positive electrode active material may include a lithium-nickel metal oxide. The lithium-nickel metal oxide may further include at least one of cobalt (Co), manganese (Mn), and aluminum (Al).

The positive electrode active material may further include a coating element or a doping element. For example, the auxiliary elements described above and elements substantially identical or similar thereto may be used as a coating element or a doping element. For example, among the elements described above, a single or a combination of two or more is used as a coating element or a doping element.

The positive electrode active material may include a nickel-cobalt-manganese (NCM)-based lithium oxide. In this case, an NCM-based lithium oxide having an increased nickel content may be used.

The content of Ni in the NCM-based lithium oxide, for example, the mole fraction of nickel of the total moles of nickel, cobalt, and manganese may be 0.6 or more, 0.7 or more, or 0.8 or more. In some example embodiment, the content of Ni may be 0.8 to 0.95, 0.82 to 0.95, 0.83 to 0.95, 0.84 to 0.95, 0.85 to 0.95, or 0.88 to 0.95.

In some example embodiments, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

(Method for manufacturing positive electrode)

For example, the positive electrode active material may be mixed into a solvent to prepare a positive electrode slurry. After coating the positive electrode current collector with the positive electrode slurry, drying and rolling may be performed to manufacture a positive electrode active material layer. The coating process may be performed by a method such as gravure coating, slot die coating, multilayer simultaneous die coating, imprinting, doctor blade coating, dip coating, bar coating, and casting, but is not limited thereto. The positive electrode active material layer may further include a binder, and may optionally further include a conductive material, a thickener, and similar or other functional additives.

(Positive electrode solvent)

A non-limiting example of the solvent used in the preparation of the positive electrode slurry may include N-methyl-2-pyrrolidone (NMP), dimethyl formamide, dimethyl acetamide, N,N-dimethylaminopropylamine, ethylene oxide, tetrahydrofuran, and similar or other solvents.

(Positive electrode binder)

The binder may include polyvinylidene fluoride (PVDF), poly(vinylidene fluoride-co-hexafluoropropylene, polyacrylonitrile, polymethyl methacrylate, acrylonitrile butadiene rubber (NBR), polybutadiene rubber (BR), styrene-butadiene rubber (SBR), and similar or other binder materials. In an example embodiment, a PVDF-based binder may be used as a positive electrode binder.

(Positive electrode conductive material)

The conductive material may be added for increasing conductivity of the positive electrode active material layer and/or mobility of lithium ions or electrons. For example, the conductive material may include carbon-based conductive materials such as graphite, carbon black, acetylene black, ketjen black, graphene, carbon nanotubes, vapor-grown carbon fiber (VGCF), and carbon fiber, and/or metal-based conductive materials including tin oxide, titanium oxide, perovskite materials such as $LaSrCoO_3$, $LaSrMnO_3$, but is not limited thereto.

(Positive electrode thickener/ dispersant)

If necessary, the positive electrode slurry may further include a thickener and/or a dispersant and the like. As an example embodiment, the positive electrode slurry may include a thickener such as carboxymethyl cellulose (CMC).

[Negative electrode]

A negative electrode may include a negative electrode current collector and a negative electrode active material layer disposed on at least one surface of the negative electrode current collector.

(Negative electrode current collector)

A non-limiting example of the negative electrode current collector may include a copper foil, a nickel foil, a stainless-steel foil, a titanium foil, a nickel foam, a copper foam, a polymer substrate coated with a conductive metal, and similar or other conductive materials. Though the negative electrode current collector is not limited thereto, thickness may be, for example, 10 um to 50 $\mu$m.

(Negative electrode material)

A negative electrode active material layer may include a negative electrode active material. As the negative electrode active material, a material capable of adsorbing or desorbing lithium ions may be used. For example, the negative electrode active material may be a carbonaceous material such as crystalline carbon, amorphous carbon, carbon composite, and carbon fiber; lithium metal; lithium alloy; a silicon (Si)-containing material, a tin (Sn)-containing material, or the like.

An example of the amorphous carbon may include hard carbon, soft carbon, coke, mesocarbon microbead (MCMB), mesophase pitch-based carbon fiber (MPCF), and similar or other amorphous carbon materials.

An example of the crystalline carbon may include graphite-based carbon such as natural graphite, artificial graphite, graphitized coke, graphitized MCMB, and graphitized MPCF.

The lithium metal may include a pure lithium metal or a lithium metal on which a protective layer is formed for suppressing dendrite growth. In an example embodiment, a lithium metal-containing layer which is deposited or coated on a negative electrode current collector may be used as a negative electrode active material. In an example embodiment, a lithium thin film layer may be used as a negative electrode active material layer.

An element included in the lithium alloy may include aluminum, zinc, bismuth, cadmium, antimony, silicon, lead, tin, gallium, indium, or the like.

The silicon-containing material may provide more increased capacity characteristics. The silicon-containing material may include Si, $SiO_x$ (0<x<2), metal-doped $SiO_x$ (0<x<2), a silicon-carbon composite, and similar or other silicon materials. The metal may include lithium and/or magnesium, and the metal-doped $SiO_x$ (0<x<2) may include metal silicate.

(Method for manufacturing negative electrode)

For example, the negative electrode active material may be mixed into the solvent to prepare a negative electrode slurry. After coating/depositing the negative electrode slurry on the negative electrode current collector, drying and rolling may be performed to manufacture a negative electrode active material layer. The coating process may be performed by a method such as gravure coating, slot die coating, multilayer simultaneous die coating, imprinting, doctor blade coating, dip coating, bar coating, and casting, but is not limited thereto. The negative electrode active material layer may further include a binder, and may optionally further include a conductive material, a thickener, and similar or other functional additives.

In some example embodiments, the negative electrode may include a negative electrode active material layer in a lithium metal form formed by a deposition/coating process.

(Negative electrode solvent)

A non-limiting example of the solvent which may be used in preparing the negative electrode slurry may include water, pure water, deionized water, distilled water, ethanol, isopropanol, methanol, acetone, n-propanol, t-butanol, and similar or other solvents.

(Negative electrode binder/ conductive material/ thickener)

As the binder, the conductive material, and the thickener, the materials described above which may be used in the manufacture of a positive electrode may be used.

In some example embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and similar or other binder materials may be used as a negative electrode binder.

[Electrode assembly]

According to example embodiments, the positive electrode, the negative electrode, and the separator may be repeatedly disposed to form an electrode assembly. In some example embodiments, the electrode assembly may be a winding type, a stacking type, a zigzag (z)-folding type, or a stack-folding type.

[Electrolyte]

A lithium secondary battery may be defined by housing the electrode assembly in a case with an electrolyte. According to example embodiments, a nonaqueous electrolyte solution may be used as the electrolyte.

(Lithium salt/ organic solvent)

A nonaqueous electrolyte solution includes a lithium salt as an electrolyte and an organic solvent. The lithium salt may be, for example, $Li^+X^-$, wherein examples of the anion ($X^-$) of the lithium salt include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and similar or other lithium salts.

A suitable organic solvent is one that has sufficient solubility for the lithium salt or the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethylsulfoxide, acetonitrile, dimethoxyethane, sulfolane, gamma-butyrolactone, propylene sulfite, and similar or other solvents. These may be used alone or in combination of two more.

(Additive)

The nonaqueous electrolyte solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds. The cyclic carbonate-based compound may include vinylene carbonate (VC), vinyl ethylene carbonate (VEC), or the like. The fluorine-substituted carbonate-based compounds may be a fluorine-substituted cyclic carbonate-based compound. The fluorine-substituted cyclic carbonate-based compound may include fluoroethylene carbonate (FEC) and similar carbonates. The sultone-based compound may include 1,3-propane sultone, 1,3-propene sultone, 1,4-butane sultone, and similar sultone compounds. The cyclic sulfate-based compound may include 1,2-ethylene sulfate, 1,2-propylene sulfate, and similar sulfate compounds. The cyclic sulfite-based compound may include ethylene sulfite, butylene sulfite, and similar sulfite compounds. The phosphate-based compound may include lithium difluoro bis-oxalato phosphate, lithium difluoro phosphate, and similar phosphate compounds. The borate-based compound may include lithium bis(oxalate) borate and similar borate compounds.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

First, a method for measuring physical properties of a separator and a method for evaluating properties of a secondary battery will be described.

[Glass transition temperature]

A glass transition temperature was measured using a differential scanning calorimeter (DSC). The manufacturer was Mettler Toledo and the model name was DSC1.

The measurement method was performed by preparing 5 to 10 mg of a specimen according to a DSC pan size, placing the specimen in a container, and pressing it with a crimper press. The prepared sample and a reference were placed thereon, a temperature range, a heating rate, and a reactive gas were selected, and analysis was performed.

The measurement conditions were as follows:

Temperature range: -100 ~ 250°C
Reactive gas: $N_2$
Heating/cooling rate: 10°C/min

[Average particle diameter]

An average particle diameter was derived from particle size distribution results obtained by collecting a sample of particles to be measured in accordance with the standard of ISO 13320-1 and performing analysis using S3500 available from MICROTRAC.

This method is used to measure an average particle size of the inorganic particles and the particulate binder.

[Molecular weight]

Measurement of a weight average molecular weight for binder was performed by using GPC (EcoSEC HLC-8320 GPC Reflective Index detector from Tosoh Corporation), TSKgel guard PWxl, two TSKgel GMPWxls, and TSKgel G2500PWxl (7.8×300 mm) were connected and used as a GPC column, a 0.1 M aqueous $NaNO_3$ solution was used as a solvent, PEG/PEO was used as a reference material, and analysis was performed at 40°C at a flow rate of 1 mL/min.

1) Gel permeation chromatograph (GPC) sample treatment

(1) Sample pretreatment: using the provided sample as it was
(2) Sample dissolution state: complete dissolution
(3) Sample solution filtration: 0.45 um Nylon filter

2) Gel permeation chromatograph (GPC) analysis instrument conditions

(1) Analysis instrument: EcoSEC HLC-8320 GPC available from Tosoh Corporation
(2) Detector: RI-detector
(3) Developing solvent: 0.1 M $NaNO_3$
(4) Column (maker, model no.): Tskgel guard PWxl + 2xTSKgel GMPWxl + TSKgel G2500PWxl (7.8×300 mm)
(5) Temperature: 40°C
(6) Flow velocity: 1.0 mL/min
(7) Injection amount: 100 ul, 100 mg/mL
(8) Reference material: PEG/PEO

[viscosity]

Viscosity was measured by setting rpm to a torque of 60-70% by a Brookfield viscometer (model RVDV2), spindle of CPA-52Z. Viscosity was measured at 25 °C.

**[Porosity]**

The porosity of a porous substrate was calculated by the following equation after cutting a rectangular sample of A cm×B cm. Both A and B were measured by cutting them into a range of 5 to 20 cm.

$$\texttt{Porosity[\%] = \{1-(M÷\rho)÷(A×B×T)\}×100}$$

wherein T = thickness of separator (cm),
M = sample weight (g), and
$\rho$ = true density (g/cm$^3$) of a porous substrate

**[Gurley permeability]**

A Gurley permeability of the porous substrate was measured according to the standard of ASTM D726, using Densometer available from Toyoseiki. The time it took for 100 ml of air to pass a porous substrate having an area of 6.4516 cm$^2$ (1 in$^2$) was recorded in seconds and compared.

**[Pin puncture strength]**

A method for measuring pin puncture strength of a separator follows the standard of ASTM D3763-02, and the measurement was performed three times for each sample and the average value was calculated.

Speed: 120mm/min
Diameter of pin: 1.0mm

**[FT-IR spectrum measurement]**

The separator was cut into a size of 1 cm×1 cm to prepare a measurement sample, and measurement was performed using a FT-IR instrument (available from Thermo Scientific, Nicolet iN10 Infrared Microscope) equipped with a mercury cadmium telluride (MCT) detector. A measured average value of main peaks shown in the FT-IR spectrum is shown in the following Table 2.

- resolution: 4 cm$^{-1}$
- scans: 16
- range 4000 to 675 cm$^{-1}$
- Measurement point per sample: 15 points (10 um spacing) * 15 points (10 um spacing) mapping 3 positions

**[Average thickness (um) of separator and porous substrate]**

The separators were overlapped in 10 layers, each thickness was measured at 5 random points in the transverse direction with a thickness meter available from Mitutoyo and combined, the sum of thicknesses was divided by 5 to derive an average thickness of the 10-layer separator, and the value was divided by 10 again to derive an overall average thickness of a single separator.

The average thickness of the porous substrate was determined by overlapping only the porous substrates in 10 layers, measuring each thickness at 5 random points in the transverse direction with a thickness meter available from Mitutoyo and combining them, dividing the sum of the thicknesses by 5 to derive an average thickness of the 10 layers separator, and dividing the value by 10 again to derive an average thickness of the porous substrate. In the case of after forming the inorganic particle layer, the inorganic particle layer was detached(detachment method, such as, e.g. 3M tape, scrubbing, optionally with ultrasonic treatment), sufficient drying was performed, and the average thickness of the porous substrate from which the inorganic particle layer was detached was derived by the method described above.

**[BDV/t (kV/$\mu$m)]**

Breakdown voltage (BDV) was measured in accordance with ASTM D 3755. It was evaluated as a voltage (kV) measured when a leakage current value which was measured under the conditions of placing the separator between electrodes of a withstand voltage tester (Croma, model 19052) under a dry room (dew point temperature: -60°C) and then raising an applied voltage to 5 kV/10 sec, was 5 mA.

The overall average thickness t ($\mu$m) of the separator was obtained by overlapping the separators in 10 layers, measuring each thickness at 5 random points in TD by a thickness meter available from Mitutoyo, dividing the sum of the thicknesses by 5 to derive an average thickness of the 10-layer separator, and dividing the value by 10 again to derive the overall average thickness of a single separator.

Thereafter, for comparison of the secured breakdown voltage versus thickness, a BDV/t value which is a ratio of the breakdown voltage BDV measured above to the overall average thickness t of the separator was determined.

**[Packing density of inorganic particle layer (g/(m$^2 \cdot$ $\mu$m))]**

An average thickness of the porous substrate and the overall average thickness of the separator having the inorganic particle layer provided on the porous substrate were measured, respectively, and then the average thickness of the porous substrate was subtracted from the overall average thickness of the separator to calculate the thickness (T, um) of the inorganic particle layer. The separator having the inorganic particle layer provided on the porous substrate was cut into an area (S, m$^2$) of 10 mm$\times$10 mm (0.01 m$^2$) to measure the weight, and then the weight of the porous substrate alone was subtracted to calculate the weight (W, g) of the inorganic particle layer alone. The packing density of the inorganic particle layer was calculated by W/ (T*S) (g/ (m$^2 \cdot$ $\mu$m)).

**[$\Delta$Gurley permeability]**

A $\Delta$Gurley permeability was calculated by the following Equation 1, after measuring a Gurley permeability which was a time in seconds it took for 100 ml of air to pass through an area of 6.4516 cm$^2$ (1 square inch) of a separator in accordance with the standard of ASTM D726, using a densometer available from Toyoseiki:

$$\Delta\text{Gurley permeability (sec/100 ml)} = P_m - P_s$$

wherein $P_m$ is a gas permeability of a separator, and $P_s$ is a gas permeability of a porous substrate.

**[Heat shrinkage rate (%)]**

A separator was cut into a square shape with a side of 10 cm, and a transverse direction (TD) and a machine direction (MD) were indicated. A sample was placed in the center, 5 sheets of paper were placed on and under the sample, respectively, and the four sides of the paper were wrapped with tape. The sample wrapped in paper was allowed to stand in a hot air drying oven at 150°C for 60 minutes. Thereafter, the sample was taken out, the separator was measured with a camera, and shrinkage rates in the machine direction (MD) and in the transverse direction (TD) were calculated using the following equations:

MD Heat shrinkage rate (%) = (length in MD before heating - length in MD after heating)/length in MD before heating $\times$ 100

TD Heat shrinkage rate (%) = (length in TD before heating - length in TD after heating)/length in TD before heating $\times$ 100

**[Adhesive strength]**

A separator was cut into a size of 50 mm wide$\times$50 mm long and placed so that the inorganic particle layer was on top. A piece of black drawing paper (20 mm wide$\times$ 150 mm long$\times$ 0.25 mm thick) having a coefficient of dynamic fraction of 0.15 was placed thereon, a pressing device was used to apply a certain pressure (200 g/cm$^2$), the black drawing paper was forcibly pulled to the side, and a degree of inorganic substance adhered on the paper surface was confirmed and determined as A/B/C/D/E/F depending on the adhesion degree, referring to the following grade:

 A: no adhesion
 B: inorganic substance adhered in a small amount on the paper surface

In C-F, the binder and the inorganic substance were adhered together and the degree of adhesion was more and more severe from C toward F.

**[Resistance properties of battery]**

Each battery manufactured according to the examples and the comparative examples was charged at a constant current-constant voltage (CC-CV) of 4.2 V using a charge/discharge cycle instrument, and then discharged. Specifically, each battery was charged at constant current with a 0.5 C rate at 25°C until the voltage reached 4.2 V, and charged at constant voltage until the current was 0.01 C while maintaining 4.2 V. Subsequently, a cycle of discharging at a constant current of 0.5 C until the voltage reached 3.0 V during discharging was repeated 300 times. Then, direct current internal resistance (DC-IR) at 1st cycle and 300th cycle was measured by a J-Pulse method at a state of charge (SOC) of 60%, and then a resistance increase rate was calculated by the following equation:

$$\Delta R\ (\%)\ =\ (R_2 - R_1)/R_1\ \times\ 100$$

wherein $R_1$ is resistance (DC-IR) at 1st cycle, and $R_2$ is resistance (DC-IR) at a 300th cycle.

**<Example 1>**

Preparation of coating slurry

95 wt% of boehmite (y-AlO(OH)) having an average particle diameter (D50) of 0.3 um as inorganic particles, and 4.2 wt% of polyacrylate (Tg: -45°C, D50: 250 nm, Sigma Aldrich Inc.) as particulate binder and 0.8 wt% of polyacrylamide (Mw: 230,000 g/mol, Tg: 200°C, Sigma Aldrich Inc.) as a water-soluble binder, based on the total weight of the solid, were added to water, and then stirring was performed to prepare a coating slurry having a solid content concentration of 25 wt%. Herein, the polyacrylamide was added in a dispersion form having a solid content of 12 wt% and a viscosity of 2,000 mPas.

Manufacture of separator

A polyethylene porous film (porosity: 42%, Gurley permeability: 118 sec/100 ml, pin puncture strength: 4.31 N (440 gf)) having an average thickness of 9 um was used as a porous substrate. A separator was manufactured by applying the coating slurry prepared above on both surfaces of the porous substrate and then drying the coating slurry to form an inorganic particle layer having an average thickness of 2.1 um, respectively, on both surfaces of the porous substrate.

Manufacture of secondary battery

94 wt% of $LiCoO_2$ as a positive electrode active material, 2.5 wt% of polyvinylidene fluoride as a fusing agent, and 3.5 wt% of carbon black as a conductive material were added to N-methyl-2-pyrrolidone (NMP) as a solvent, and stirring was performed to prepare a uniform positive electrode slurry. The slurry prepared above was coated on an aluminum foil having a thickness of 30 $\mu$m, dried, and pressed to manufacture a positive electrode having a total thickness of 150 $\mu$m. 95 wt% of artificial graphite as a negative electrode active material, 3 wt% of acryl-based latex having Tg of -52°C as a fusing agent, and 2 wt% of carboxymethyl cellulose (CMC) as a thickener were added to water as a solvent, and stirring was performed to prepare a uniform negative electrode slurry. The slurry prepared above was coated on a copper foil having a thickness of 20 $\mu$m, dried, and pressed to manufacture a negative electrode having a total thickness of 150 um. A pouch type battery was assembled by stacking the separator manufactured above between the positive electrode and the negative electrode, and in order to fuse the positive electrode, the negative electrode, and the separator together, the assembled battery was heat-fused at 80°C, 1 MPa with a heat press machine. Thereafter, an electrolyte in which 1 M lithium hexafluorophosphate ($LiPF_6$) was dissolved in a solution including ethylene carbonate (EC), ethyl methyl carbonate (EMC), and dimethyl carbonate (DMC) at a volume ratio of 3:5:2 was injected, and the battery was sealed to manufacture a secondary battery having a capacity of 2 Ah.

**<Example 2>**

A separator and a secondary battery were manufactured in the same manner as in Example 1, except that boehmite having an average particle diameter (D50) of 0.27 um was used as the inorganic particles during manufacture of the coating slurry.

**<Example 3>**

A separator and a secondary battery were manufactured in the same manner as in Example 1, except that two types of boehmite having average particle diameters (D50) of 0.3 μm and 0.7 um, respectively, were mixed at a weight ratio of 8:2 and used as the inorganic particles during manufacture of the coating slurry.

**<Example 4>**

A separator and a secondary battery were manufactured in the same manner as in Example 1, except that two types of boehmite having average particle diameters (D50) of 0.3 μm and 0.7 um, respectively, were mixed at a weight ratio of 7:3 and used as the inorganic particles during manufacture of the coating slurry.

**<Example 5>**

A separator and a secondary battery were manufactured in the same manner as in Example 1, except that two types of boehmite having average particle diameters (D50) of 0.3 μm and 0.7 um, respectively, were mixed at a weight ratio of 6:4 and used as the inorganic particles during manufacture of the coating slurry.

**<Comparative Example 1>**

Preparation of coating slurry

95 wt% of boehmite (γ-AlO(OH)) particles having an inorganic average particle diameter (D50) of 1.3 μm as inorganic particles and 5 wt% of polyacrylate (Mw: 120,000 g/mol, Tg: -45°C, D50: 250 nm, Sigma Aldrich Inc.) as a particulate binder, based on the total weight of the solid, were added to water, and then stirring was performed to prepare a coating slurry having a solid content concentration of 25 wt%.

Manufacture of separator

A polyethylene porous film (porosity: 42%, Gurley permeability: 118 sec/100 cc, pin puncture strength: 4.31 N (440 gf)) having an average thickness of 9 um was used as a porous substrate. A separator was manufactured by applying the coating slurry prepared above on both surfaces of the porous substrate and then drying the coating slurry to form an inorganic particle layer having an average thickness of about 2.0 um, respectively, on both surfaces of the porous substrate.

Manufacture of positive electrode, negative electrode, and battery

A positive electrode and a negative electrode were manufactured in the same manner as in Example 1, and a secondary battery was manufactured with the separator manufactured above.

**<Comparative Example 2>**

Preparation of coating slurry

95 wt% of boehmite (γ-AlO(OH)) particles having an inorganic average particle diameter (D50) of 0.7 μm as inorganic particles, and 4.2 wt% of polyacrylate (Mw: 120,000 g/mol, Tg: -45°C, D50: 250 nm, Sigma Aldrich Inc.) and 0.8 wt% of polyacrylamide (Mw: 150,000 g/mol, Tg: 200°C, Sigma Aldrich Inc.) as a binder, based on the total weight of the solid, were added to water, and then stirring was performed to prepare a coating slurry having a solid content concentration of 28 wt%. Herein, the polyacrylamide was added in a dispersion form having a solid content of 12 wt% and a viscosity of 2,000 mPas.

Manufacture of separator

A polyethylene porous film (porosity: 42%, Gurley permeability: 118 sec/100 cc, pin puncture strength: 4.31 N (440 gf)) having an average thickness of 9 um was used as a porous substrate. A separator was manufactured by applying the coating slurry prepared above on both surfaces of the porous substrate and then drying the coating slurry to form an inorganic particle layer having an average thickness of 2.0 um, respectively, on both surfaces of the porous substrate.

Manufacture of positive electrode, negative electrode, and battery

A positive electrode and a negative electrode were manufactured in the same manner as in Example 1, and a secondary battery was manufactured with the separator manufactured above.

**<Comparative Example 3>**

Preparation of coating slurry

90 wt% of inorganic particles in which two types of boehmite ($\gamma$-AlO(OH)) particles having inorganic average particle diameters (D50) of 0.3 $\mu$m and 0.7 $\mu$m, respectively were mixed at a weight ratio of 8:2 and 10 wt% of polyacrylate (Mw: 120,000 g/mol, Tg: -45°C, D50: 250 nm, Sigma Aldrich Inc.) as a binder, based on the total weight of the solid content, were added to water, and then stirring was performed to prepare a coating slurry having a solid content concentration of 25 wt%.

Manufacture of separator

A polyethylene porous film (porosity: 42%, Gurley permeability: 118 sec/100 ml, pin puncture strength: 4.31 N (440 gf)) having an average thickness of 9 $\mu$m was used as a porous substrate. A separator was manufactured by applying the coating slurry prepared above on both surfaces of the porous substrate and then drying the coating slurry to form an inorganic particle layer having an average thickness of 2.0 um, respectively, on both surfaces of the porous substrate.

Manufacture of positive electrode, negative electrode, and battery

A positive electrode and a negative electrode were manufactured in the same manner as in Example 1, and a secondary battery was manufactured with the separator manufactured above.

**<Comparative Example 4>**

Preparation of coating slurry

93 wt% of inorganic particles in which two types of boehmite ($\gamma$-AlO(OH)) particles having inorganic average particle diameters (D50) of 0.3 $\mu$m and 0.7 $\mu$m, respectively were mixed at a weight ratio of 8:2 and 7 wt% of polyacrylamide (Mw: 150,000 g/mol, Tg: 200°C, Sigma Aldrich Inc.) as a binder, based on the total weight of the solid content, were added to water, and then stirring was performed to prepare a coating slurry having a solid content concentration of 25 wt%.

Manufacture of separator

A polyethylene porous film (porosity: 42%, Gurley permeability: 118 sec/100 ml, pin puncture strength: 4.31 N (440 gf)) having an average thickness of 9 um was used as a porous substrate. A separator was manufactured by applying the coating slurry prepared above on both surfaces of the porous substrate and then drying the coating slurry to form an inorganic particle layer having an average thickness of 2.0 um, respectively, on both surfaces of the porous substrate.

Manufacture of positive electrode, negative electrode, and battery

A positive electrode and a negative electrode were manufactured in the same manner as in Example 1, and a secondary battery was manufactured with the separator manufactured above.

**<Comparative Example 5>**

Preparation of coating slurry

95 wt% of inorganic particles in which two types of boehmite ($\gamma$-AlO(OH)) particles having inorganic average particle diameters (D50) of 0.3 $\mu$m and 0.7 $\mu$m, respectively were mixed at a weight ratio of 8:2, and 4.2 wt% of polyacrylate (Mw: 120,000 g/mol, Tg: -45°C, D50: 250 nm, Sigma Aldrich Inc.) and 0.8 wt% of polyethylene oxide (Mv: 200,000 g/mol, Tg: 65°C, Sigma Aldrich Inc.) as a binder, based on the total weight of the solid content, were added to water, and then stirring was performed to prepare a coating slurry having a solid content concentration of 25 wt%.

Manufacture of separator

A polyethylene porous film (porosity: 42%, Gurley permeability: 118 sec/100 ml, pin puncture strength: 4.31 N (440 gf)) having an average thickness of 9 um was used as a porous substrate. A separator was manufactured by applying the coating slurry prepared above on both surfaces of the porous substrate and then drying the coating slurry to form an inorganic particle layer having an average thickness of 2.0 um, respectively, on both surfaces of the porous substrate.

Manufacture of positive electrode, negative electrode, and battery

A positive electrode and a negative electrode were manufactured in the same manner as in Example 1, and a secondary battery was manufactured with the separator manufactured above.

The physical properties of the separators manufactured in the examples and the comparative examples and the performance (resistance properties) of the secondary batteries were measured and are shown in the following Table 1. In addition, the results of measuring the FT-IR spectra of the separators manufactured in the examples and the comparative examples are shown in the following Table 2.

[Table 1]

| | Physical properties of separator | | | | | | | Battery performance | | |
|---|---|---|---|---|---|---|---|---|---|---|
| | Separator thickness (t) (pm) | BDV/t (kV/μm) | Packing density of inorganic particle layer (g/ (m² · μm)) | ΔGurley permeability (sec/100 ml) | Heat shrinkage rate (%) | | Adhesive strength | Initial discharge resistance (mΩ) | Discharge resistance @ 300th cycle (mΩ) | Resistance increase rate (%) |
| | | | | | MD | TD | | | | |
| Ex 1 | 13.2 | 0.161 | 1.33 | 30 | 0.5 | 1 | A | 19.3 | 24.0 | 24 |
| Ex 2 | 13.2 | 0.158 | 1.24 | 25 | 0.7 | 1.6 | A | 18.9 | 23.7 | 25 |
| Ex 3 | 13.0 | 0.158 | 1.30 | 31 | 1.0 | 1.9 | A | 19.7 | 24.1 | 22 |
| Ex 4 | 12.9 | 0.164 | 1.34 | 34 | 1.3 | 2.0 | A | 19.5 | 24.1 | 24 |
| Ex 5 | 13.0 | 0.156 | 1.29 | 28 | 2.5 | 3.3 | A | 19.8 | 24.8 | 25 |
| Comp. Ex 1 | 13.1 | 0.140 | 0.94 | 39 | 45 | 49 | A | 23.5 | 30.9 | 31 |
| Comp. Ex 2 | 13.0 | 0.145 | 1.15 | 30 | 4.5 | 4.8 | B | 22.6 | 29.2 | 29 |
| Comp. Ex 3 | 13.0 | 0.142 | 1.19 | 42 | 52 | 53 | B | 21.0 | 26.6 | 27 |
| Comp. Ex 4 | 13.0 | 0.166 | 1.30 | 109 | 1.5 | 2.5 | A | 23.1 | 32.2 | 39 |
| Comp. Ex 5 | 13.0 | 0.135 | 1.03 | 17 | 64 | 66 | D | 19.6 | 26.0 | 33 |

[Table 2]

| Peak position (cm$^{-1}$) | 1 | 2 | 3 | 4 | 5 |
|---|---|---|---|---|---|
| Example 1 | 2920 | 3298 | 3099 | 1077 | 1150 |
| Example 2 | 2920 | 3298 | 3099 | 1076 | 1150 |
| Example 3 | 2920 | 3288 | 3096 | 1080 | 1149 |
| Example 4 | 2920 | 3286 | 3095 | 1081 | 1149 |
| Example 5 | 2920 | 3288 | 3096 | 1082 | 1149 |
| Comparative Example 1 | 2918 | 3282 | 3095 | 1086 | 1147 |
| Comparative Example 2 | 2920 | 3281 | 3095 | 1084 | 1148 |
| Comparative Example 3 | 2920 | 3288 | 3096 | 1080 | 1149 |
| Comparative Example 4 | 2920 | 3288 | 3096 | 1080 | 1149 |
| Comparative Example 5 | 2920 | 3288 | 3096 | 1080 | 1149 |

As seen from Tables 1 and 2 above, the separators of the examples having the BDV/t value of 0.15 or more, peaks shown in a range of 1070 to 1082 cm$^{-1}$, in the FT-IR spectrum (also denoted as "first peak" in the present disclosure), the ΔGurley permeability of 100 sec/100 ml or less, and the heat shrinkage rate of 5% or less had excellent withstand voltage characteristics, a high packing density of the inorganic particle layer, low ΔGurley permeability and heat shrinkage rate at a high temperature (150°C), and also excellent adhesive strength, even at a small thickness. In addition, the batteries with the separators applied had low initial discharge resistance and low discharge resistance after 300 cycles.

However, in the separators of Comparative Examples 1 to 5 which did not satisfy at least any one of the BDV/t value, the presence of the peak shown in a specific position in the FT-IR spectrum, the ΔGurley permeability value, and the heat shrinkage rate value, any one of the withstand voltage characteristics, heat resistance, adhesion, and low permeability was significantly lowered, and the initial discharge resistance and the discharge resistance after 300 cycles of the batteries with the separators applied were higher than those of the examples.

The separator according to the present disclosure may have excellent withstand voltage characteristics, heat resistance, adhesion, and permeability.

In addition, the present disclosure may provide a lithium secondary battery having high capacity/high output characteristics, high stability, and a low defect rate at a low voltage, by including the separator according to an example embodiment.

The above description is only an example to which the principle of the present disclosure is applied, and other constitutions may be further included without departing from the scope of the present disclosure.

**Claims**

1. A separator comprising:

   a porous substrate; and
   an inorganic particle layer including a binder and inorganic particles disposed on at least one surface of the porous substrate,
   wherein a ratio of a breakdown voltage (kV) of the separator to an overall average thickness (μm) of the separator is 0.15 kV/μm or more, and
   wherein the separator has a peak in a range of 1070 cm$^{-1}$ to 1082 cm$^{-1}$ in a spectrum by Fourier transform infrared spectroscopy (FT-IR),
   heat shrinkage rates in the machine direction and in the transverse direction of 5% or less as measured after being allowed to stand at 150°C for 60 minutes, and
   ΔGurley permeability of 100 sec/100 ml or less as calculated by the following Equation 1:

$$[\text{Equation 1}]$$

$$\Delta\text{Gurley permeability (sec/100 ml)} = P_m - P_s$$

wherein $P_m$ is a gas permeability of the separator, and $P_s$ is a gas permeability of the porous substrate.

2. The separator of claim 1, wherein the inorganic particles include any one or two or more selected from the group consisting of metal hydroxides, metal oxides, metal nitrides, and metal carbides.

3. The separator of claim 1 or 2, wherein the inorganic particles have an average particle diameter (D50) of 0.01 um to 0.65 um.

4. The separator of any one of the preceding claims, wherein the inorganic particles include a first type of inorganic particles having an average particle diameter (D50) of 0.01 um to 0.5 um.

5. The separator of claim 4, wherein the inorganic particles further include a second type of inorganic particles having a larger average particle diameter (D50) than the first type of inorganic particles,
and/or wherein the second inorganic particles have the average particle diameter (D50) of 0.4 um to 1.0 um, or 0.6 um to 0.8 um.

6. The separator of claim 5, wherein the second inorganic particles are included at 50 wt% or less based on the total weight of the first type of inorganic particles and the second type of inorganic particles.

7. The separator of any one of the preceding claims, wherein the binder includes a particulate binder and a water-soluble binder.

8. The separator of claim 7, wherein the particulate binder has a glass transition temperature of -60°C to 0°C, and/or wherein the water-soluble binder has a glass transition temperature of 180°C to 220°C.

9. The separator of any one of claims 7 to 8, wherein the particulate binder and the water-soluble binder independently of each other include any one or more selected from the group consisting of ester-based polymers, amide-based polymers, imide-based polymers, acryl-based polymers, acrylamide-based polymers, vinyl alcohol-based polymers, fluorine-based polymers, and vinylpyrrolidone-based polymers, preferably wherein the particulate binder and the water-soluble binder independently of each other include acryl-based polymers and/or acrylamide-based polymers, more preferably include an acryl-based particulate binder and an acrylamide-based water-soluble binder.

10. The separator of any one of the preceding claims, wherein the binder is included at 0.1 parts by weight to 20 parts by weight with respect to 100 parts by weight of the inorganic particles.

11. The separator of any one of claims 7 to 10, wherein a weight ratio between the water-soluble binder and the particulate binder is 1:1 to 1:10.

12. The separator of any one of the preceding claims, wherein the inorganic particle layer has a packing density of 1.2 g/m²·μm.

13. A method for manufacturing a separator, comprising:

providing a porous substrate;
a step of preparing a coating slurry including a binder and inorganic particles; and a step of applying the coating slurry on one or both surfaces of the porous substrate to form an inorganic particle layer respectively on one or both surfaces of the porous substrate;
wherein the separator obtained has a peak in a range of 1070 cm$^{-1}$ to 1082 cm$^{-1}$ in a spectrum by Fourier transform infrared spectroscopy (FT-IR), has heat shrinkage rates in the machine direction and in the transverse direction of 5% or less as measured after being allowed to stand at 150°C for 60 minutes, and has ΔGurley permeability of 100 sec/100 ml or less as calculated by the following Equation 1:

[Equation 1]

ΔGurley permeability (sec/100 ml) = $P_m$ - $P_s$

wherein $P_m$ is a gas permeability of the separator, and $P_s$ is a gas permeability of the porous substrate.

14. The method of claim 13, wherein the peak in the range of 1070 cm$^{-1}$ to 1082 cm$^{-1}$ is indicating the binding energy between atoms included in the inorganic particles included in the inorganic particle layer, and presence or absence of the peak shown in the range of 1070 cm$^{-1}$ to 1082 cm$^{-1}$ is determined by any one of:

        average particle diameter of the inorganic particles;
        a combination of first and second type of inorganic particles;
        a weight ratio of one or two or more types of inorganic particles; and
        the type and the physical properties of binder;
        and/or
        wherein the method is used to manufacture the separator of any one of claims 1 to 12.

15. A lithium secondary battery comprising the separator of any one of claims 1 to 12.

| | Europäisches Patentamt European Patent Office Office européen des brevets | **EUROPEAN SEARCH REPORT** | **Application Number** EP 24 22 1809 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/327287 A1 (KIM YUN BONG [KR] ET AL) 12 October 2023 (2023-10-12) | 1-4,6,7, 9-15 | INV. H01M50/489 |
| A | * claim all; examples 1-5 * ----- | 5,8 | H01M50/403 H01M50/417 |
| X | WO 2023/153657 A1 (LG ENERGY SOLUTION LTD [KR]) 17 August 2023 (2023-08-17) | 1-4,6-15 | H01M50/42 H01M50/423 |
| A | * claim all; examples 1,2; table 1 * ----- | 5 | H01M50/431 H01M50/443 |
| X | US 2022/037739 A1 (LEE JUNGYOON [KR] ET AL) 3 February 2022 (2022-02-03) | 1-7,9-15 | H01M50/446 H01M50/449 |
| A | * paragraph [0048] - paragraph [0049]; claim all; examples 1-7 * ----- | 8 | H01M50/457 |

**TECHNICAL FIELDS SEARCHED (IPC)**

H01M

The present search report has been drawn up for all claims

| Place of search | Date of completion of the search | Examiner |
|---|---|---|
| Munich | 16 April 2025 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 22 1809

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | Publication date | Patent family member(s) | Publication date |
|---|---|---|---|
| US 2023327287 A1 | 12-10-2023 | EP 4258450 A2 | 11-10-2023 |
| | | JP 2023155220 A | 20-10-2023 |
| | | US 2023327287 A1 | 12-10-2023 |
| WO 2023153657 A1 | 17-08-2023 | CN 118318344 A | 09-07-2024 |
| | | EP 4439843 A1 | 02-10-2024 |
| | | JP 2024540498 A | 31-10-2024 |
| | | KR 20230122467 A | 22-08-2023 |
| | | US 2025105444 A1 | 27-03-2025 |
| | | WO 2023153657 A1 | 17-08-2023 |
| US 2022037739 A1 | 03-02-2022 | CN 113273027 A | 17-08-2021 |
| | | EP 3905380 A1 | 03-11-2021 |
| | | KR 20200079905 A | 06-07-2020 |
| | | US 2022037739 A1 | 03-02-2022 |
| | | WO 2020138627 A1 | 02-07-2020 |

EPO FORM P0459

For more details about this annex : see Official Journal of the European Patent Office, No. 12/82